# FASCICULE DE BREVET EUROPEEN

(11) **EP 2 682 649 B1**
(45) Date de publication et mention de la délivrance du brevet: **14.10.2015**
(21) Numéro de dépôt: 13169085.1
(22) Date de dépôt: 24.05.2013
(51) Int. Cl.: F16J 15/02

(54) **Joint d'étanchéité rainuré et son utilisation pour assurer une étanchéité fluidique et une orientation entre des éléments de distribution de fluide**
Dichtungsfuge mit Dichtungsnut, und ihre Verwendung zur Sicherstellung einer Fluiddichtigkeit und einer Ausrichtung zwischen des Fluidverteilungselementen
Grooved seal and use thereof to provide a fluid seal and orientation between fluid distribution elements

(30) Priorité: 04.07.2012 FR 1256386
(43) Date de publication de la demande: 08.01.2014
(73) Titulaire: Air Liquide Medical Systems, 92160 Antony (FR)
(72) Inventeur: Chaffard, Denis, 01170 GEX (FR); Collado, Pedro, 77330 OZOIR LA FERRIERE (FR); Giard, Pauline, 14190 SAINT GERMAIN LE VASSON (FR); Zbidi, Mourad, 91380 CHILY MAZARIN (FR)
(74) Mandataire: Pittis, Olivier

(56) Documents cités:
- EP-A2- 0 139 337
- WO-A1-2010/083132
- FR-A1- 2 580 365

## Description

La présente invention se rapporte à un joint d'étanchéité comprenant une ou plusieurs rainures hélicoïdales et son utilisation pour assurer l'étanchéité d'un raccordement tout en offrant la possibilité d'orientation des éléments raccordés l'un par rapport à l'autre.

Il est connu d'utiliser un moyen d'étanchéité, tel un joint, pour assurer une étanchéité fluidique entre deux éléments raccordés l'un à l'autre, lesdits éléments servant par exemple à convoyer un fluide, tel un gaz. Typiquement, le moyen d'étanchéité est inséré entre lesdits éléments au niveau de leur site de raccordement de sorte d'assurer une continuité fluidique et une étanchéité entre lesdits éléments en minimisant les fuites de fluide, notamment de gaz, au niveau du site de raccordement.

Pour ce faire, il est connu d'utiliser en tant que moyen d'étanchéité notamment avec possibilité d'orientation d'un élément par rapport à l'autre:
- des systèmes de raccord orientables avec écrou et contre-écrou à joints bimatière et torique. Toutefois, ce type de système d'étanchéité nécessite plusieurs pièces encombrantes et couteuses, et engendre une complexité du système.
- 2 joints superposés en polyamide, tel le Nylon^{™}. Cependant, cette solution n'est valable que pour des diamètres de raccordements faibles, c'est-à-dire inférieurs ou égaux à 17 mm et n'a qu'une capacité d'écrasement limitée et donc insuffisante.
- des joints de type diabolo, en laiton ou en aluminium, mais, là encore, cette solution n'est valable pour des diamètres faibles, c'est-à-dire inférieurs ou égaux à 14 mm.

En outre, certaines de ces solution connues ne permettent pas d'assurer une étanchéité correcte lorsque la pression atteint plusieurs dizaines de bar, par exemple 20 à 30 bar, ou n'autorisent pas une orientation correcte des éléments raccordés les uns par rapport aux autres ou encore engendrent des pertes de charge importantes.

Par ailleurs, les documents WO-A-2010/083132, qui constitue l'état de la technique le plus proche, FR-A-2580365 et EP-A-139337 ont proposé des joints d'étanchéité dont le corps de joint est traversé par un passage central et comprenant en outre une surface périphérique externe avec une rainure aménagée de forme circulaire.

Toutefois, ce type de joint n'est pas idéal car une rainure de forme circulaire agencée entre deux pièces assemblées devant être étanchéifiées, ne permet pas de réaliser une bonne orientation des pièces assemblées en assurant en même temps une étanchéité efficace au niveau du raccordement.

De plus, le niveau d'écrasement du joint n'est pas variable et le diamètre interne de passage peut varier en fonction de l'écrasement du joint et de sa déformation, ce qui peut engendrer des pertes de charges plus ou moins importantes et impacter négativement le débit de fluide traversant ledit joint.

Le problème qui se pose est dès lors de pouvoir disposer d'un joint d'étanchéité amélioré permettant notamment d'assurer une étanchéité jusqu'à 30 bar de pression, une orientation notamment radiale d'un raccordement allant jusqu'à 60 mm environ, n'engendrant pas ou peu de pertes de charge, et qui soit de coût bas et de complexité faible.

La solution de l'invention est un joint d'étanchéité selon la revendication 1 comprenant un corps de joint traversé par un passage central, ledit corps de joint comprenant une surface interne délimitant ledit passage central et une surface périphérique externe, **caractérisé en ce qu'il** comprend en outre au moins une rainure aménagée dans au moins l'une desdites surfaces interne et périphérique externe, **caractérisé en ce que** ladite au moins une rainure a une forme hélicoïdale.

Selon le cas, le joint d'étanchéité de l'invention peut comprendre l'une ou plusieurs des caractéristiques techniques suivantes :
- il comprend au moins une rainure aménagée dans chacune desdites surfaces interne et périphérique externe.
- le corps de joint est de forme générale cylindrique.
- le corps de joint est formé d'au moins un matériau déformable.
- le corps de joint est formé d'un matériau choisi parmi les polymères.
- le corps de joint est formé de polyamide (PA), de polyéthylène (PE) ou de polytétrafluoroéthylène (PTFE).
- la section du passage est inférieure ou égale à 50 mm, de préférence inférieure ou égale à 20 mm.
- il a une longueur comprise ente 5 mm et 20 mm, de préférence entre 5 et 10 mm.
- ladite au moins une rainure a une profondeur de 0,3 mm à 2 mm et une largeur inférieure ou égale à 2 mm.
- ladite au moins une rainure a un angle d'ouverture (α) compris entre 30 et 120°, de préférence compris entre 30 et 80°, avantageusement de l'ordre de 45 à 60°.

L'invention concerne en outre une utilisation d'un joint d'étanchéité selon la revendication 11 pour assurer une étanchéité fluidique entre deux éléments ou pièces raccordés l'un à l'autre, et avantageusement permettre ou faciliter l'orientation des pièces l'une par rapport à l'autre, ledit joint étant inséré entre lesdits éléments ou pièces au niveau de leur site de raccordement, de sorte qu'une continuité fluidique et une étanchéité soient ainsi obtenues entre lesdits éléments ou pièces.

En d'autres termes, l'invention concerne aussi un procédé selon la revendication 13 pour assurer une étanchéité fluidique entre deux éléments véhiculant un fluide, de préférence un gaz, en particulier de l'oxygène ou tout autre gaz de l'air, qui sont raccordés l'un à l'autre, dans lequel on insère un joint d'étanchéité selon l'invention, en particulier un joint à rainures hélicoïdales, entre lesdits éléments.

Avantageusement, on opère une orientation d'un des éléments par rapport à l'autre par déformation dudit joint. Selon le matériau choisi pour constituer le corps 1 de joint, l'écrasement dudit joint peut être irréversible et l'orientation, une fois obtenue, être fixe et définitive, ou au contraire, l'écrasement peut être temporaire et réversible, tout comme l'orientation des pièces l'une par rapport à l'autre.

En fait, l'orientation des éléments est obtenue en écrasant au moins partiellement le joint, c'est-à-dire grâce à la possibilité donnée au corps de joint 1, du fait de la présence des rainures interne et externe 2, 3, de subir une compression et une déformation contrôlée avec faible rétrécissement de sa section de passage, ce qui permet une orientation donnée des deux pièces raccordées l'une par rapport à l'autre selon un angle de 0 à 360°.

Par ailleurs, les éléments ou pièces à raccorder comprennent chacun des passages internes de fluide ayant une section de forme préférentiellement circulaire, notamment des passages internes de forme tubulaire servant à véhiculer le fluide, c'est-à-dire du gaz ou du vide.

De préférence, les éléments ou pièces à raccorder sont des éléments de tuyauterie, tels des vannes, des conduits, des raccords ou analogues, servant au convoyage et/ou à la distribution de gaz, pouvant notamment alimenter un dispositif de délivrance de gaz médicaux par exemple, en particulier des éléments de conduits ou analogues servant au convoyage et/ou à la distribution d'oxygène ou de gaz industriels ou médicaux sous pression.

Le joint selon la présente invention n'est pas limité à un type de gaz particulier et est dès lors utilisable pour assurer l'étanchéité d'éléments traversés par un gaz ou mélange gazeux constitué ou comprenant l'un ou plusieurs des gaz choisis parmi l'oxygène, l'air, l'azote, le protoxyde d'azote, l'hélium, l'hydrogène, le NO, le xénon, le krypton, le néon, le CO et le CO₂.

De même, le joint selon la présente invention peut aussi être utilisé pour assurer l'étanchéité d'éléments sous vide (pression < 1 atm), tels des parties d'un réseau de vide, par exemple des conduits, vannes ou autres.

Avantageusement, les deux éléments raccordés l'un à l'autre véhiculent un gaz à une pression comprise entre 1 et 30 bar absolus.

Selon un mode de réalisation, les éléments de convoyage ou de distribution de fluide entre lesquels est interposé le joint selon la présente invention font partie d'un réseau de gaz ou de vide agencé au sein d'un bâtiment hospitalier.

De façon générale, la ou les rainures hélicoïdales aménagées sur le joint selon la présente invention conduisent aux avantages suivants :
- elles permettent une bonne orientation des deux pièces assemblées l'une par rapport à l'autre en assurant une étanchéité fluidique efficace.
- l'étanchéité est assurée pour un niveau d'écrasement variable.
- elles permettent de conserver, quel que soit l'écrasement, un diamètre interne de passage important, reproductible et régulier afin de réduire les pertes de charge et de maintenir le débit.

L'invention va maintenant être mieux comprise grâce à la description suivante faite en références aux Figures annexées parmi lesquelles :
- la Figure 1 schématise un mode de réalisation d'un joint d'étanchéité selon la présente invention,
- la Figure 2 illustre une utilisation du joint de la Figure 1 pour assurer l'étanchéité entre deux éléments de vanne,
- la Figure 3 montre le joint de la Figure 1 vu en coupe longitudinale, et
- la Figure 4 est une vue grossie d'une partie de la Figure 3.

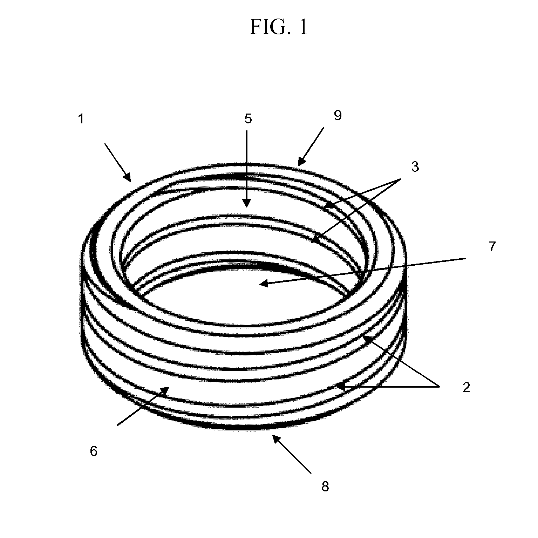

La Figure 1 est un mode de réalisation d'un joint d'étanchéité selon la présente invention, comprenant un corps de joint 1 de forme générale cylindrique, traversé par un passage central 7 permettant le passage d'un fluide, en particulier d'un gaz.

Le corps de joint 1 comprend une surface interne 5 délimitant le passage central 7.

Par ailleurs, la paroi périphérique externe du corps de joint 1 comprend une surface périphérique externe 6 située du côté extérieur du joint.

Selon la présente invention, au moins une rainure 2, 3 de forme hélicoïdale est aménagée au sein d'au moins l'une desdites surfaces interne 5 et périphérique externe 6 et, de préférence, une première rainure 3 est portée par la paroi interne 5 du corps 1 de joint et une deuxième rainure 2 est réalisée dans la paroi interne 6 du corps 1 de joint.

La ou les deux rainures 2, 3 ont une forme hélicoïdale et s'étendent sur tout ou partie des surfaces interne 5 et externe 6 du joint, entre les extrémités amont 8 et aval 9 du corps de joint 1. De préférence, les rainures 2, 3 s'étendent sur toutes les surfaces interne 5 et externe 6 du joint, c'est-à-dire qu'elles s'étendent entre les extrémités ou bords amont 8 et aval 9 du joint.

Les rainures 2, 3 de forme hélicoïdale peuvent être formées dès le départ, c'est-à-dire lors de la fabrication du corps de joint 1 par moulage par exemple, ou creusées dans la ou les parois 5, 6 subséquemment à la fabrication du corps de joint 1.

Selon le mode de réalisation considéré, les rainures 2, 3 de forme hélicoïdale ont une profondeur de 0.3 à 2 mm et une largeur inférieure ou égale à 2 mm, et/ou ont une ouverture formant un angle α de 30 à 120°, par exemple de l'ordre de 45 à 60°.

Le corps de joint 1 est formé d'un matériau déformable, c'est-à-dire flexible, tel un polymère, avantageusement un polyamide.

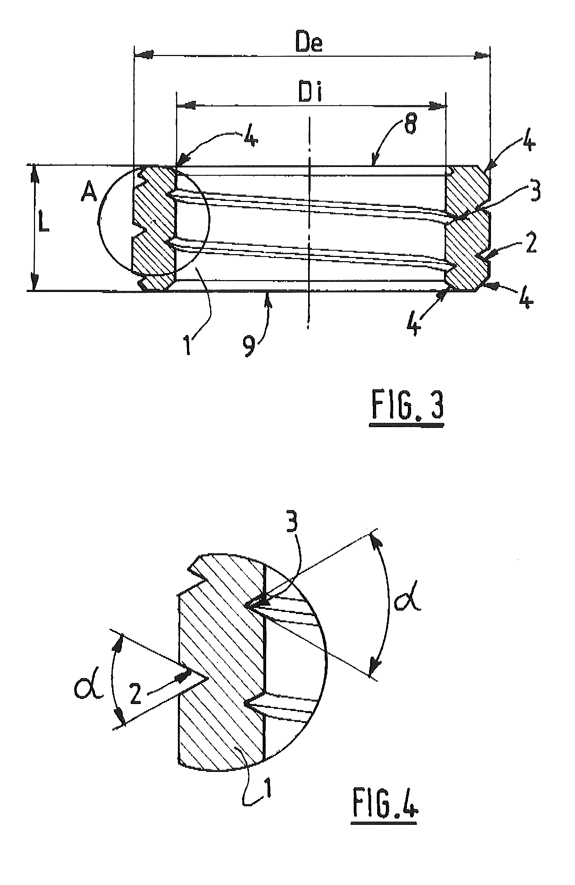

Typiquement, la section du passage du corps de joint 1, c'est-à-dire le diamètre interne Di est inférieur ou égal à 50 mm, de préférence encore inférieur ou égal à 30 mm, de préférence encore inférieur ou égal à 20 mm, et son diamètre externe De est d'au moins 10 mm, de préférence entre 10 et 50 mm, de préférence encore entre 15 et 30 mm de préférence encore entre 15 et 20 mm, et avec De > Di. En outre, la longueur L du corps de joint 1 est préférentiellement comprise entre 5 et 20 mm, de préférence entre 5 et 10 mm, comme détaillé sur la Figure 3 et sur la Figure 4 qui est une vue grossie de la zone A de la Figure 3. A noter que les extrémités du corps de joint 1 peuvent présenter des chanfreins ou des biseaux.

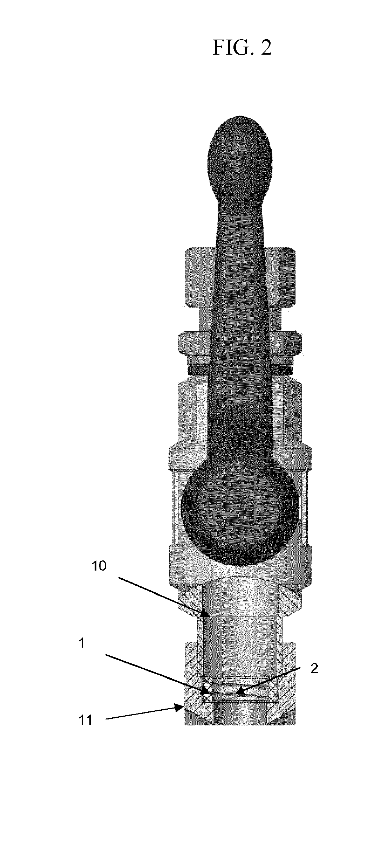

Comme illustré sur la Figure 2, le joint selon la présente invention permet d'assurer l'étanchéité fluidique, en particulier gazeux, jusqu'à une pression de l'ordre de 30 bar, d'un raccordement de pièces ou d'éléments 10, 11 véhiculant un fluide, en particulier un gaz, tels des éléments de tuyauterie, tout en permettant une orientation radiale ou un alignement correct des pièces 10, 11 raccordées l'une par rapport à l'autre de quelques degrés jusqu'à 360 ° et ce, sans engendrer de pertes de charges importantes grâce un maintien de la section de passage 7.

Ceci est possible grâce aux deux rainures hélicoïdales 2, 3 interne et externe qui permettent l'écrasement du joint d'une manière contrôlée, c'est-à-dire son 'tassement' axial, comme expliqué ci-dessus.

Comme visible sur la Figure 2, le joint de l'invention permet de réaliser une étanchéité fluidique entre par exemple une vanne 10 sur un raccord 11. ici, la section de passage du gaz s'en trouve légèrement réduite, en passant par exemple de 13.7 mm à 11 mm, mais cette réduction de la section de passage n'engendre pas de pertes de charges notables.

En fait, un premier vissage permet d'assurer la tenue mécanique de l'assemblage 10, 11, par exemple un vissage selon un ½ tour, et un deuxième vissage permet d'orienter le raccordement des pièces 10, 11, par exemple un vissage allant jusqu'à 1 tour ¾. Le serrage se fait à la main avec des outils standards, telle une clé plate, et l'étanchéité est alors assurée pour toutes positions, c'est-à-dire quelle que soit l'orientation choisie entre 0 et 360°.

Pour des besoins de maintenance, le système est facilement démontable par dévissage du raccordement et le joint à double rainure peut alors être retiré facilement en le « dévissant » comme une vis.

Le joint d'étanchéité à rainures de forme hélicoïdale selon la présente invention est particulièrement bien adapté à une utilisation en milieu médical, notamment hospitalier.

## Revendications

1. Joint d'étanchéité comprenant un corps de joint (1) traversé par un passage central (7), ledit corps de joint (1) comprenant une surface interne (5) délimitant ledit passage central (7) et une surface périphérique externe (6), et comprenant en outre au moins une rainure (2, 3) aménagée dans au moins l'une desdites surfaces interne (5) et périphérique externe (6), **caractérisé en ce que** ladite au moins une rainure (2, 3) a une forme hélicoïdale.

2. Joint d'étanchéité selon la revendication précédente, **caractérisé en ce qu'il** comprend au moins une rainure (2, 3) aménagée dans chacune desdites surfaces interne (5) et périphérique externe (6).

3. Joint d'étanchéité selon l'une des revendications précédentes, **caractérisé en ce que** le corps de joint (1) est de forme générale cylindrique.

4. Joint d'étanchéité selon l'une des revendications précédentes, **caractérisé en ce que** le corps de joint (1) est formé d'au moins un matériau déformable.

5. Joint d'étanchéité selon l'une des revendications 1 à 4, **caractérisé en ce que** le corps de joint (1) est formé d'un matériau choisi parmi les polymères.

6. Joint d'étanchéité selon l'une des revendications précédentes, **caractérisé en ce que** le corps de joint (1) est formé de polyamide, de polyéthylène ou de polytétrafluoroéthylène.

7. Joint d'étanchéité selon l'une des revendications précédentes, **caractérisé en ce que** la section (Di) du passage (7) est inférieure ou égale à 50 mm.

8. Joint d'étanchéité selon l'une des revendications précédentes, **caractérisé en ce que** la section (Di) du passage (7) est inférieure ou égale à 20 mm.

9. Joint d'étanchéité selon l'une des revendications précédentes, **caractérisé en ce qu'il** a une longueur (L) comprise ente 5 et 20 mm, de préférence entre 5 et 10 mm.

10. Joint d'étanchéité selon l'une des revendications précédentes, **caractérisé en ce que** ladite au moins une rainure (2, 3) a une profondeur de 0.3 à 2 mm et une largeur inférieure ou égale à 2 mm, et/ou un angle d'ouverture (α) compris entre 30 et 120°.

11. Utilisation d'un joint d'étanchéité selon l'une des revendications précédentes pour assurer une étanchéité fluidique entre deux éléments (10, 11) raccordés l'un à l'autre, ledit joint étant inséré entre lesdits éléments (10, 11) au niveau de leur site de raccordement.

12. Utilisation selon la revendication 11, **caractérisée en ce que** les deux éléments (10, 11) raccordés l'un à l'autre véhiculent un gaz à une pression comprise entre 1 et 30 bar abs.

13. Procédé pour assurer une étanchéité fluidique entre deux éléments (10, 11) véhiculant un fluide qui sont raccordés l'un à l'autre, dans lequel on insère un joint d'étanchéité selon l'une des revendications 1 à 10 entre lesdits éléments (10, 11).

14. Procédé selon la revendication 13, **caractérisé en ce qu'**on opère une orientation d'un des éléments (10, 11) par rapport à l'autre par déformation dudit joint.

15. Procédé selon l'une des revendications 13 ou 14, **caractérisé en ce que** le fluide est un gaz, en particulier de l'oxygène.

## Patentansprüche

1. Dichtungselement, umfassend einen Dichtungskörper (1), der von einem mittleren Durchgang (7) durchquert wird, wobei der Dichtungskörper (1) eine Innenfläche (5), die den mittleren Durchgang (7) begrenzt, und eine Außenumfangsfläche (6) umfasst und ferner wenigstens eine Nut (2, 3) umfasst, die in wenigstens einer der Innenfläche (5) und der Außenumfangsfläche (6) eingerichtet ist, **dadurch gekennzeichnet, dass** die wenigstens eine Nut (2, 3) eine Spiralform hat.

2. Dichtungselement nach dem vorhergehenden Anspruch, **dadurch gekennzeichnet, dass** es wenigstens eine Nut (2, 3) umfasst, die in jeder der Innenfläche (5) und der Außenumfangsfläche (6) eingerichtet ist.

3. Dichtungselement nach einem der vorhergehenden Ansprüche, **dadurch gekennzeichnet, dass** der Dichtungskörper (1) eine allgemein zylindrische Form hat.

4. Dichtungselement nach einem der vorhergehenden Ansprüche, **dadurch gekennzeichnet, dass** der Dichtungskörper (1) aus wenigstens einem verformbaren Material geformt ist.

5. Dichtungselement nach einem der Ansprüche 1 bis 4, **dadurch gekennzeichnet, dass** der Dichtungskörper (1) aus einem Material geformt ist, das aus den Polymeren gewählt ist.

6. Dichtungselement nach einem der vorhergehenden Ansprüche, **dadurch gekennzeichnet, dass** der Dichtungskörper (1) aus Polyamid, Polyethylen oder Polytetrafluorethylen geformt ist.

7. Dichtungselement nach einem der vorhergehenden Ansprüche, **dadurch gekennzeichnet, dass** der Querschnitt (Di) des Durchgangs (7) kleiner oder gleich 50 mm ist.

8. Dichtungselement nach einem der vorhergehenden Ansprüche, **dadurch gekennzeichnet, dass** der Querschnitt (Di) des Durchgangs (7) kleiner oder gleich 20 mm ist.

9. Dichtungselement nach einem der vorhergehenden Ansprüche, **dadurch gekennzeichnet, dass** er eine Länge (L) hat, die zwischen 5 und 20 mm, vorzugsweise zwischen 5 und 10 mm beträgt.

10. Dichtungselement nach einem der vorhergehenden Ansprüche, **dadurch gekennzeichnet, dass** die wenigstens eine Nut (2, 3) eine Tiefe von 0,3 bis 2 mm und eine Breite von kleiner oder gleich 2 mm und/oder einen Öffnungswinkel (α) zwischen 30 und 120° hat.

11. Verwendung eines Dichtungselements nach einem der vorhergehenden Ansprüche, um eine fluidische Dichtigkeit zwischen zwei Elementen (10, 11) sicherzustellen, die miteinander verbunden sind, wobei das Dichtungselement zwischen den zwei Elementen (10, 11) im Bereich ihrer Verbindungsstelle eingesetzt ist.

12. Verwendung nach Anspruch 11, **dadurch gekennzeichnet, dass** die zwei Elemente (10, 11), die miteinander verbunden sind, ein Gas mit einem Druck zwischen 1 und 30 bar abs. transportieren.

13. Verfahren zum Sicherstellen einer fluidischen Dichtigkeit zwischen zwei Elementen (10, 11), die ein Fluid transportieren und miteinander verbunden sind, bei dem ein Dichtungselement nach einem der Ansprüche 1 bis 10 zwischen den Elementen (10, 11) eingesetzt wird.

14. Verfahren nach Anspruch 13, **dadurch gekennzeichnet, dass** eine Ausrichtung eines der Elemente (10, 11) relativ zu dem anderen durch Verformung des Dichtungselements durchgeführt wird.

15. Verfahren nach einem der Ansprüche 13 oder 14, **dadurch gekennzeichnet, dass** das Fluid ein Gas, insbesondere Sauerstoff, ist.

## Claims

1. Seal comprising a seal body (1) through which a central passage (7) passes, said seal body (1) comprising an inner surface (5) which defines said central passage (7) and an outer peripheral surface (6), and further comprising at least one groove (2, 3) which is made in at least one of said inner (5) and outer peripheral (6) surfaces, **characterised in that** said at least one groove (2, 3) is spiral-shaped.

2. Seal according to the preceding claim, **characterised in that** it comprises at least one groove (2, 3) which is made in each of said inner (5) and outer peripheral (6) surfaces.

3. Seal according to either of the preceding claims, **characterised in that** the seal body (1) is generally cylindrical.

4. Seal according to any of the preceding claims, **characterised in that** the seal body (1) is made of at least one deformable material.

5. Seal according to any of claims 1 to 4, **characterised in that** the seal body (1) is made of a material selected from polymers.

6. Seal according to any of the preceding claims, **characterised in that** the seal body (1) is made of polyamide, polyethylene or polytetrafluoroethylene.

7. Seal according to any of the preceding claims, **characterised in that** the cross section (Di) of the passage (7) is less than or equal to 50 mm.

8. Seal according to any of the preceding claims, **characterised in that** the cross section (Di) of the passage (7) is less than or equal to 20 mm.

9. Seal according to any of the preceding claims, **characterised in that** it has a length (L) of between 5 and 20 mm, preferably of between 5 and 10 mm.

10. Seal according to any of the preceding claims, **characterised in that** said at least one groove (2, 3) has a depth of from 0.3 to 2 mm and a width of less than or equal to 2 mm, and/or an opening angle (α) of between 30 and 120°.

11. Use of a seal according to any of the preceding claims to ensure fluid sealing between two interconnected elements (10, 11), said seal being inserted between said elements (10, 11) in the region of the connection point thereof.

12. Use according to claim 11, **characterised in that** the two interconnected elements (10, 11) convey a gas at a pressure of between 1 and 30 bar abs.

13. Method for ensuring fluid sealing between two elements (10, 11) which convey a fluid and are interconnected, wherein a seal according to any of claims 1 to 10 is inserted between said elements (10, 11).

14. Method according to claim 13, **characterised in that** one of the elements (10, 11) is oriented relative to the other by deforming said seal.

15. Method according to either claim 13 or claim 14, **characterised in that** the fluid is a gas, in particular oxygen.
